# EUROPÄISCHE PATENTANMELDUNG

(11) **EP 0 524 165 A1**
(43) Veröffentlichungstag der Anmeldung: **20.01.1993**
(21) Anmeldenummer: 92890161.0
(22) Anmeldetag: 02.07.1992
(51) Int. Cl.: F24J 2/04, F24J 2/46, F24J 2/26

(54) **Sonnenkollektor**

(30) Priorität: 18.07.1991 AT 1446/91
(71) Anmelder: Schwarz, Alois, A-6382 Kirchdorf in Tirol (AT)
(72) Erfinder: Schwarz, Alois, A-6382 Kirchdorf in Tirol (AT)
(74) Vertreter: Atzwanger, Richard, Dipl.-Ing. Patentanwalt

(57) **Zusammenfassung**

Sonnenkollektor bestehend aus zwei zueinander angenähert parallel im Abstand voneinander angeordneten Sammlerrohren (2, 3) und diese miteinander verbindenden Kollektorrohren (4), welchen Kollektorelemente (5) zugeordnet sind, wobei die Sammlerrohre (2, 3) und die Kollektorrohre (4) von einem Wärmeträger durchströmbar sind. Dabei sind die Kollektorelemente (5) an den Kollektorrohren (4) starr befestigt und sind die Kollektorrohre (4) gegenüber den Sammlerrohren (2, 3) verdrehbar, wodurch die Lage der Kollektorelemente (5) einstellbar ist.

## Beschreibung

Die Erfindung betrifft einen Sonnenkollektor bestehend aus zwei zueinander angenähert parallel und voneinander im Abstand angeordneten Sammlerrohren sowie diese miteinander verbindenden Kollektorrohren, welchen Kollektorelemente zugeordnet sind, wobei die Sammlerrohre und die Kollektorrohre von einem Wärmeträger durchströmbar sind.

Um mittels bekannter Sonnenkollektoren eine optimale Energieausbeute zu erzielen, ist es bekannt, diese in einer Schräglage anzuordnen, in welcher sie gegenüber einem mittleren Sonnenstand angenähert senkrecht ausgerichtet sind.

Aus der US-PS 4 542 737 und aus der US-PS 4 632 091 sind weiters Sonnenkollektoren bekannt, bei welchen den Kollektorrohren in ihrer Lage einstellbare Spiegel zugeordnet sind, wobei durch die Einstellung der Spiegel in Abhängigkeit vom Sonnenstand die Wärmestrahlung auf die Kollektorrohre fokussiert wird. Diese Ausbildung entspricht jedoch deshalb nicht den Erfordernissen, da durch die Spiegel deshalb eine nur unzureichende Übertragung der eingestrahlten Wärmeenergie erfolgt, da hierfür einerseits eine exakte Einstellung derselben erforderlich ist und da andererseits deren Reflexionsgrad durch Verschmutzung vermindert wird. Zudem wird durch Spiegel nur die direkte Wärmestrahlung auf die Kollektorrohre fokussiert, wogegen diffuse Wärmeenergie nicht zu den Kollektorrohren gelangt.

Der gegenständlichen Erfindung liegt demnach die Aufgabe zugrunde, eine Konstruktion zu schaffen, bei welcher eine Einstellung der Kollektorelemente in Bezug auf den Sonnenstand erfolgt und dessen ungeachtet eine optimale Übertragung der auftretenden Wärmeenergie auf die Kollektorrohre gewährleistet ist. Dies wird erfindungsgemäß dadurch erzielt, daß die Kollektorelemente an den Kollektorrohren starr befestigt sind und daß die Kollektorrohre gegenüber den Sammlerrohren verdrehbar sind, wodurch die Lage der Kollektorelemente einstellbar ist. Durch diese Ausbildung ist gewährleistet, daß die Kollektorelemente in die optimale Lage für die Aufnahme der Wärmeenergie verstellt werden können und daß zudem die von den Kollektorelementen aufgenommene Wärmeenergie auf die Kollektorelemente vollständig übertragen wird.

Vorzugsweise gehen von den Sammlerrohren Anschlußrohre aus, welche in die Kollektorrohre einragen. Um die erforderliche synchrone Verdrehung der Kollektorrohre zu bewirken, sind sämtliche Kollektorrohre mit Zahnrädern, Scheiben od.dgl., drehfest verbunden, an welchen für den Antrieb von einem zentralen Motor her eine Kette, ein Riemen od.dgl., angreift. Vorzugsweise sind die Kollektorrohre in Ausnehmungen von zu den Kollektorrohren quer stehenden Stegblechen gelagert. Um weiters die auftretenden Wärmespannungen aufzunehmen, ist es vorteilhaft, wenn zwischen einem Traggestell für die Sammlerrohre und den Kollektorrohren sich an diese Teile abstützende Druckfedern angeordnet sind.

Zur Erzielung der erforderlichen Abdichtung zwischen den Sammlerrohren und den Kollektorrohren ist vorzugsweise auf die Kollektorrohre eine Hülse aufgeschraubt, in welcher eine Ringdichtung angeordnet ist. Dabei kann die Antriebsscheibe od.dgl., zwischen der Hülse und einem Absatz des Kollektorrohres geklemmt sein.
Nach einer bevorzugten Ausführungsform sind die Kollektorelemente als Lamellen ausgebildet, welche von den Kollektorrohren in entgegengesetzte Richtungen hin abragen, wobei sie auf einer Oberfläche mit einer Auflage aus wärmeisolierendem Material ausgebildet sind.

Soferne der Sonnenkollektor eine vergrößerte Länge aufweisen soll, können mehrere Kollektorrohre mittels in diese eingesetzter Rohrstutzen miteinander verbunden sein, wobei die Rohrstutzen in Ausnehmungen von Stegblechen gelagert sein können.

Der Gegenstand der Erfindung ist nachstehend anhand eines in der Zeichnung dargestellten Ausführungsbeispiels näher erläutert. Es zeigen:
Fig. 1 die Gesamtansicht eines anmeldungsgemäßen Sonnenkollektors, in axonometrischer Darstellung,
Fig. 2, 3 und 4 Details des Sonnenkollektors, in gegenüber der Fig.1 vergrößertem Maßstab, sowie
die Fig. 5 und 6 die Kollektorelemente in zwei unterschiedlichen Drehlagen.

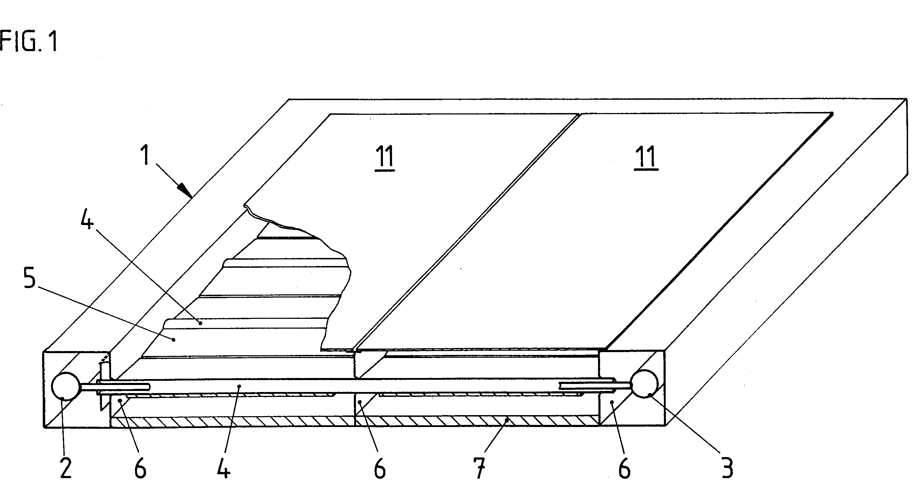

Wie dies aus Fig. 1 ersichtlich ist, weist ein anmeldungsgemäßer Sonnenkollektor ein Gehäuse 1 auf, welches an seiner Oberseite mit einer Abdeckung 11 aus für Wärmestrahlung durchlässigem Material versehen ist. Innerhalb des Gehäuses 1 befinden sich zwei Sammlerrohre 2 und 3, zwischen welchen sich Kollektorrohre 4, an welchen Kollektorelemente 5 befestigt sind, befinden. Die Kollektorrohre 4 durchsetzen Ausnehmungen von parallel zu den Sammlerrohren 2 und 3 ausgerichteten Stegblechen 6, wobei sie in den Ausnehmungen gelagert sind. An der Unterseite des Gehäuses 1 ist eine Isolierschichte 7 angeordnet.

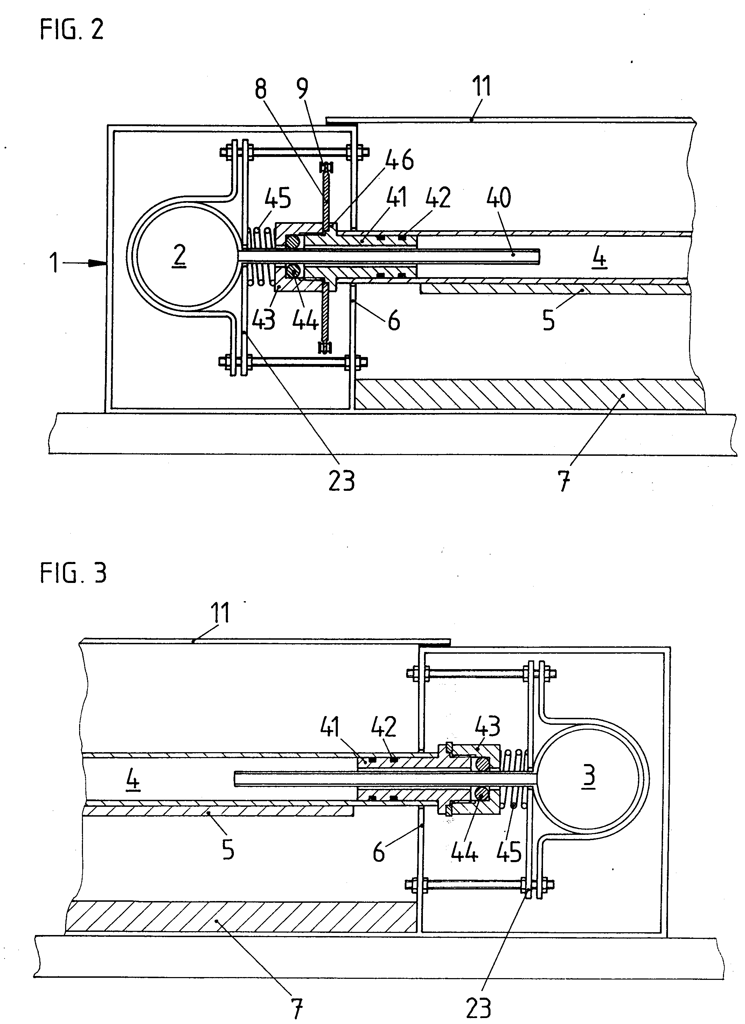

Wie dies aus Fig. 2 ersichtlich ist, gehen vom Sammlerrohr 2 mit diesem fest verbundene Anschlußrohre 40 aus, welche in das zugeordnete Kollektorrohr 4 einragen. Die abdichtende Verbindung zwischen dem Kollektorrohr 4 und dem zugeordneten Anschlußrohr 40 ist dadurch bewirkt, daß in das Kollektorrohr 4 ein Rohrstück 41 eingesetzt ist, welches mittels Dichtungselementen 42 abgedichtet und mit dem Kollektorrohr 4, z.B. durch Klebung, fest verbunden ist. An seinem dem Sammlerrohr 2 zugewandten Ende ist das Rohrstück 41 mit einem Gewinde ausgebildet, auf welches eine Hülse 43 aufgeschraubt ist, welche zur Aufnahme eines Dichtungsringes 44 dient. Um zwischen dem Kollektorrohr 4 und dem Traggestell 23 für das Sammlerrohr 2 Wärmedehnungen zu ermöglichen, sind zwischen dem Traggestell 23 und den Kollektorrohren 4 Druckfedern 45 angeordnet. Weiters ist zwischen der Hülse 43 und einem Anschlag 46 des Rohrstückes 41 ein Zahnrad 8 befestigt, welches mittels einer Kette 9 verdrehbar ist.

Die Verbindung der Kollektorrohre 4 mit dem zweiten Sammlerrohr 3 bzw. die Befestigung der Kollektorrohre 4 im Bereich des zweiten Sammlerrohres 3 ist in der gleichen Weise ausgebildet, abgesehen davon, daß auf der anderen Seite kein Zahnrad vorgesehen ist.

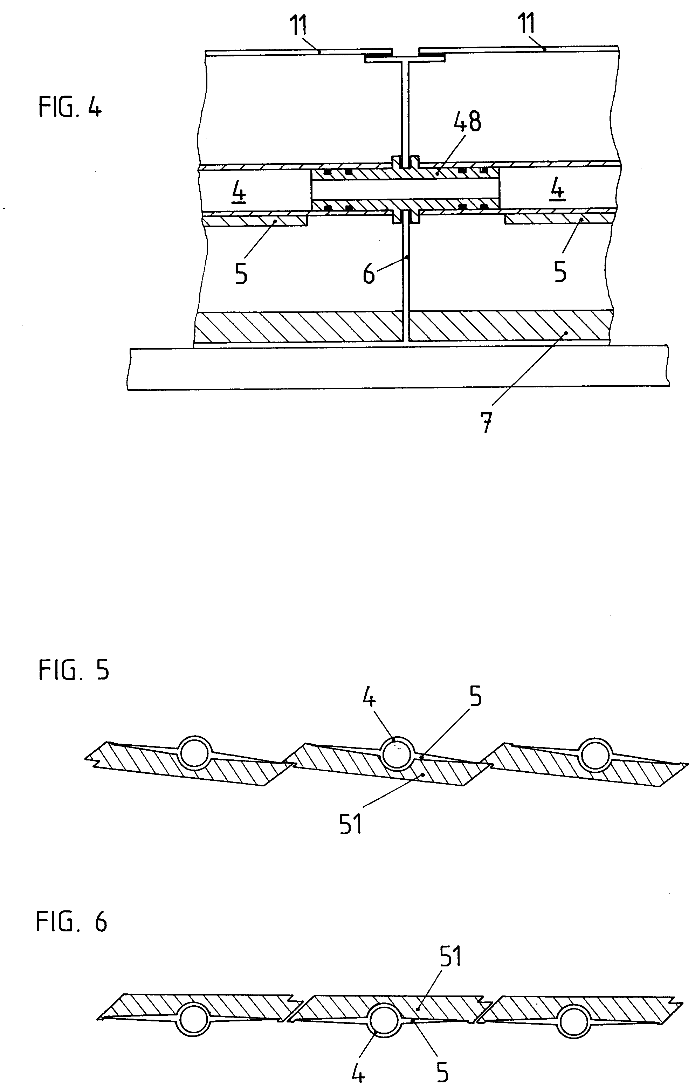

Wie dies in Fig. 4 dargestellt ist, können Kollektorrohre 4 in beliebiger Anzahl mittels Rohrstutzen 48 miteinander verbunden sein, wodurch die Kollektorrohre 4 und damit auch die Kollektorelemente 5 beliebige Längen aufweisen können. Die Rohrstutzen 48 sind in Ausnehmungen von weiteren Stegblechen 6 des Kollektorgehäuses gelagert.

In Fig. 5 ist eine erste Arbeitslage der Sonnenkollektoren 5 und der an diesen vorgesehenen Isolierungen 51 dargestellt. Soferne sich der Sonnenstand ändert, können die Kollektorelemente 5 mittels der sämtliche Kollektorrohre 4 verbindenden Kette 9 über die Zahnräder 8 verdreht werden, wodurch eine Anpassung an den Sonnenstand erfolgt. Soferne dabei aufgrund der klimatischen Bedingungen keine Aufnahme von Sonnenenergie möglich ist oder, soferne eine Überhitzung des Kollektors vermieden werden soll, können die Kollektorrohre 4 auch in die in Fig.6 dargestellte Lage verstellt werden, in welcher sich die auf diesen angeordneten Isolierungen 51 auf der dem Lichteinfall zugewandten Seite befinden, wodurch eine Isolierung des gesamten Sonnenkollektors gegenüber der eintretenden Sonnenenergie bzw. gegenüber Kälte bewirkt wird.

## Patentansprüche

1. Sonnenkollektor bestehend aus zwei zueinander angenähert parallel im Abstand voneinander angeordneten Sammlerrohren und diese miteinander verbindenden Kollektorrohren, welchen Kollektorelemente zugeordnet sind, wobei die Sammlerrohre und die Kollektorrohre von einem Wärmeträger durchströmbar sind, dadurch gekennzeichnet, daß die Kollektorelemente (5) an den Kollektorrohren (4) starr befestigt sind und die Kollektorrohre (4) gegenüber den Sammlerrohren (2, 3) verdrehbar sind, wodurch die Lage der Kollektorelemente (5) einstellbar ist.

2. Sonnenkollektor nach Anspruch 1, dadurch gekennzeichnet, daß von den Sammlerrohren (2, 3) Anschlußrohre (40) ausgehen, welche in die Kollektorrohre (4) einragen.

3. Sonnenkollektor nach einem der Ansprüche 1 und 2, dadurch gekennzeichnet, daß sämtliche Kollektorrohre (4) mit Zahnrädern (8), Scheiben od.dgl., drehfest verbunden sind, an welchen für den Antrieb von einem zentralen Motor her eine Kette (9), ein Riemen od.dgl., angreift.

4. Sonnenkollektor nach einem der Ansprüche 1 bis 3, dadurch gekennzeichnet, daß die Kollektorrohre (4) in Ausnehmungen von zu den Kollektorrohren (4) quer stehenden Stegblechen (6) gelagert sind.

5. Sonnenkollektor nach einem der Ansprüche 1 bis 4, dadurch gekennzeichnet, daß zwischen einem Traggestell (23) für die Sammlerrohre (2, 3) und den Kollektorrohren (4) sich an diese Teile abstützende Druckfedern (45) angeordnet sind.

6. Sonnenkollektor nach einem der Ansprüche 1 bis 5, dadurch gekennzeichnet, daß auf die Kollektorrohre (4) eine Hülse (43) aufgeschraubt ist, in welcher eine Ringdichtung (44) angeordnet ist.

7. Sonnenkollektor nach einem der Ansprüche 1 bis 6, dadurch gekennzeichnet, daß die Antriebsscheibe (8) od.dgl., zwischen der Hülse (43) und einem Absatz (45) des Kollektorrohres (4) geklemmt ist.

8. Sonnenkollektor nach einem der Ansprüche 1 bis 7, dadurch gekennzeichnet, daß die Kollektorelemente (5) als Lamellen ausgebildet sind, welche von den Kollektorrohren (4) in entgegengesetzte Richtungen hin abragen, wobei sie auf einer Oberfläche mit einer Auflage (51) aus wärmeisolierendem Material ausgebildet sind.

9. Sonnenkollektor nach einem der Ansprüche 1 bis 8, dadurch gekennzeichnet, daß mehrere Kollektorrohre (4) mittels in diese eingesetzter Rohrstutzen (48) miteinander verbunden sind, wobei die Rohrstutzen (48) in Ausnehmungen von Stegblechen (6) gelagert sind.
